# EUROPÄISCHE PATENTSCHRIFT

(11) **EP 3 817 213 B1**
(45) Veröffentlichungstag und Bekanntmachung des Hinweises auf die Patenterteilung: **15.12.2021**
(21) Anmeldenummer: 19206445.9
(22) Anmeldetag: 31.10.2019
(51) Int. Cl.: H02M 7/12, H02M 7/48, H02K 15/12, H02P 29/60, H02P 29/62, H02P 29/64

(54) **ELEKTRISCHE AUFWÄRMVORRICHTUNG FÜR EIN MINDESTENS EINE WICKLUNG UMFASSENDES BAUTEIL SOWIE VERFAHREN ZUM BETREIBEN EINER DERARTIGEN AUFWÄRMVORRICHTUNG**
ELECTRIC HEATING DEVICE FOR A COMPONENT COMPRISING AT LEAST ONE WINDING, AND METHOD FOR OPERATING SUCH A HEATING DEVICE
DISPOSITIF DE CHAUFFAGE ÉLECTRIQUE POUR UN COMPOSANT COMPRENANT AU MOINS UN ENROULEMENT ET PROCÉDÉ POUR FAIRE FONCTIONNER UN TEL DISPOSITIF DE CHAUFFAGE

(43) Veröffentlichungstag der Anmeldung: 05.05.2021
(73) Patentinhaber: VAF GmbH, 73441 Bopfingen (DE)
(72) Erfinder: Braun, Thomas, 73469 Riesbürg (DE); Steinhart, Heinrich, 73430 Aalen (DE); Bosch, Swen, 89542 Herbrechtingen (DE)
(74) Vertreter: Schorr, Peter Karl

(56) Entgegenhaltungen:
- EP-A1- 1 677 411
- WO-A1-2019/045371
- DE-A1-102010 042 487
- US-A1- 2018 375 411

## Beschreibung

Die Erfindung betrifft eine elektrische Aufwärmvorrichtung für ein mindestens eine Wicklung umfassendes Bauteil sowie ein Verfahren zum Betreiben einer derartigen Aufwärmvorrichtung.

Es ist bekannt, dass bei elektrischen Maschinen der Stator aus einem Blechpaket besteht, welches aus einzelnen Blechen besteht, die gegeneinander isoliert sind. In die Nuten des Blechpakets wird zunächst die sogenannte Nutisolation eingelegt und anschließend die Wicklung eingebracht. Um mögliche Bewegung der einzelnen Leiter gegeneinander und gegenüber dem Blechpaket zu reduzieren sowie zum Schutz vor Verschmutzung, werden die Wicklungen vergossen. Zum Aushärten der Vergussmasse wird diese durch eine elektrische Aufwärmvorrichtung auf eine gewünschte Temperatur erhitzt.

Aufwärmvorrichtungen für Bauteile, die mindestens eine Wicklung umfassen, beispielsweise Statoren oder Rotoren für elektrische Maschinen, sind aus dem Stand der Technik in unterschiedlichen Bauformen bekannt. Hierbei wird das Bauteil mittels Stromeinprägung in einem Frequenzbereich von 5 Hz bis 50 Hz elektrisch erwärmt. Die bekannten elektrischen Aufwärmvorrichtungen umfassen hierzu einen Standard-Frequenzumrichter mit nachgeschaltetem Transformator.

Bei den bekannten elektrischen Aufwärmvorrichtungen hat es sich als nachteilig herausgestellt, dass durch das Vorsehen von Transformatoren ein hoher Bauraum vorgehalten werden muss und zudem der Stromrichter groß dimensioniert ausgestaltet werden muss. Zudem führt die Verwendung eines Transformators zu einer hohen Blindleistungsaufnahme.

Aus EP 1 677 411 A1 ist ein Verfahren zum Erfassen einer Temperatur eines Elektromotors bekannt.

Aus US 2018/0375411 A1 ist ein Verfahren zum Trocknen einer rotierenden Maschine bekannt.

Aufgabe eines Ausführungsbeispiels der Erfindung ist, eine elektrische Aufwärmvorrichtung für ein mindestens eine Wicklung umfassendes Bauteil vorzuschlagen, die kompakt baut und energieeffizient ausbildbar ist.

Diese Aufgabe wird gelöst durch eine elektrische Aufwärmvorrichtung nach Anspruch 1 zum Aushärten von Vergussmasse für ein mindestens eine Wicklung umfassendes Bauteil, mit mindestens einer Wandlereinrichtung, die an ein elektrisches Versorgungsnetz anschließbar ist und durch die ein Wechselstrom des Versorgungsnetzes in einen Gleichstrom wandelbar ist, mit mindestens einem Kontaktmittel, das am Bauteil anordenbar oder angeordnet ist und durch das das Bauteil durch seinen ohmschen Widerstand elektrisch beheizbar ist, mit mindestens einem elektronischen Stellglied, das zwischen Wandlereinrichtung und Kontaktmittel angeordnet ist, das durch eine von der Wandlereinrichtung erzeugten Zwischenkreisspannung U_{DC} betreibbar ist und durch das abwechselnd mindestens ein erster Phasenstrom I₁, ein zweiter Phasenstrom I₂ und/oder ein dritter Phasenstrom I₃ am Kontaktmittel erzeugbar ist/sind, und mit mindestens einer Steuereinheit, die mindestens ein Speichermittel umfasst in dem mindestens eine Materialkonstante, eine Induktivität Ls und ein Widerstand Rs des Bauteils hinterlegbar oder hinterlegt ist, der mindestens ein Sensormittel zum Erfassen der mindestens drei Phasenströme I_{1,2,3} am Bauteil funktional zuordenbar oder zugeordnet ist, durch die eine Temperatur am Bauteil zumindest aus den drei Phasenströmen I_{1,2,3}, der Zwischenkreisspannung U_{DC} sowie der Materialkonstante, der Induktivität Ls und des Widerstands Rs des Bauteils, insbesondere nach dem ohmschen Gesetz, berechenbar ist, und wobei die Steuereinheit dazu ausgebildet ist, einen Sollwert der Zwischenkreisspannung U_{DC} zum Einstellen einer im Speichermittel hinterlegbaren oder hinterlegten SOLL-Temperatur am Bauteil zu berechnen und den Sollwert der Zwischenkreisspannung U_{DC} an der Wandlereinrichtung einzustellen.

Dadurch, dass die elektrische Aufwärmvorrichtung ein elektronisches Stellglied umfasst, mit denen mindestens drei Phasenströme am Bauteil einstellbar sind, ist ein zyklisches Bestromen des Bauteils bei gleichzeitigem kompaktem Ausbilden der Aufwärmvorrichtung ermöglicht. Darüber hinaus ist durch das Vorsehen eines der Steuereinheit funktional zugeordneten oder zuordenbaren Sensormittels eine Messwerterfassung erleichtert und ein Regeln und Steuern der elektrischen Aufwärmvorrichtung durch die Steuereinheit skalierbar und energieeffizient ausbildbar.

Die Materialkonstante, die Induktivität sowie der Widerstand des Bauteils, insbesondere der Wicklungen des Bauteils, können in dem Speichermittel der Steuereinheit hinterlegt sein oder hinterlegt werden. Hierdurch ist die Aufwärmvorrichtung für unterschiedliche Bauteile unterschiedlicher Dimensionen und Bauformen verwendbar. Darüber hinaus ist es denkbar, dass die Aufwärmvorrichtung durch die Steuereinheit durch Ausführen eines Messprogramms die Materialkonstante, die Induktivität und den Widerstand des Bauteils vor dem Erwärmen des Bauteils automatisch ermittelt und in dem Speichermittel ablegt.

Dadurch, dass durch die Steuereinheit ein Sollwert der Zwischenkreisspannung zum Einstellen einer bestimmten Temperatur am Bauteil berechenbar ist und an der Wandlereinrichtung einstellbar ist, kann ein energieeffizientes Erwärmen oder Beheizen des Bauteils gewährleistet werden.

Die bestimmte Temperatur am Bauteil kann ebenfalls in dem Speichermittel der Steuereinheit hinterlegt sein und/oder manuell oder automatisch in dem Speichermittel beispielsweise durch einen Benutzer hinterlegt werden.

Durch die erfindungsgemäße elektrische Aufwärmvorrichtung kann auf das Vorsehen eines Transformators verzichtet werden, wodurch zumindest nahezu keine Blindleistungsaufnahme stattfindet. Damit entfällt auch die ungewünschte Erwärmung des Transformators. Darüber hinaus ist durch die zuvor beschriebene Ausgestaltung ein geringerer Bauraum im Vergleich zu bekannten Aufwärmvorrichtungen vorzuhalten sowie eine Messwerterfassung vereinfacht. Schließlich ist der Aufbau der elektrischen Aufwärmvorrichtung auf einfache Weise skalierbar und energieeffizient ausbildbar.

Bei einer Weiterbildung der Aufwärmvorrichtung erweist es sich als vorteilhaft, wenn das Bauteil ein Wickelgut, wie Stator oder Rotor, und mindestens eine Wicklung umfasst und/oder wenn das Kontaktmittel mindestens zwei Kontaktabschnitte umfasst, mit denen es am Bauteil festlegbar oder festgelegt ist, wobei die mindestens zwei Kontaktabschnitte an bezüglich der mindestens einen Wicklung entgegengesetzten Abschnitten am Bauteil festlegbar oder festgelegt ist.

Hierdurch ist ein Erwärmen des Bauteils, insbesondere im Bereich der Wicklung, verbessert.

Das elektronische Stellglied kann grundsätzlich beliebig ausgebildet sein und beispielsweise eine Mehrzahl von Leistungstransistoren umfassen. Zum Erzeugen der mindestens drei Phasenströme ist bei einer Ausführungsform der Aufwärmvorrichtung vorgesehen, dass das elektronische Stellglied mindestens drei Brückenzweige umfasst, wobei durch einen ersten Brückenzweig der erste Phasenstrom I₁, durch einen zweiten Brückenzweig der zweite Phasenstrom I₂ und/oder durch einen dritten Brückenzweig der dritte Phasenstrom I₃ am Kontaktmittel erzeugbar ist.

Dem jeweils ersten Phasenstrom I₁ kann am Bauteil eine erste Induktivität L₁ und ein erster Widerstand R₁ zugeordnet sein. Dem zweiten Phasenstrom I₂ kann am Bauteil eine zweite Induktivität L₂ und ein zweiter Widerstand R₂ zugeordnet sein. Schließlich kann dem dritten Phasenstrom I₃ am Bauteil eine dritte Induktivität L₃ und ein dritter Widerstand R₃ zugeordnet sein.

Bei einer Weiterbildung letztgenannter Ausführungsform erweist es sich als vorteilhaft, wenn mindestens einer der mindestens drei Brückenzweige mindestens zwei leistungselektronische Schalter umfasst, durch die die jeweilige Phasenspannung am Brückenzweig den Wert der Zwischenkreisspannung U_{DC} oder 0 Volt umfasst.

Hierdurch umfasst jeweils nur eine der mindestens drei Phasenströme die Zwischenkreisspannung U_{DC} und die verbleibenden Brückenzweige 0 Volt.

Um die leistungselektronischen Schalter effizient zu schalten, ist bei einer Weiterbildung letztgenannter Ausführungsform vorgesehen, dass das elektronischen Stellglied der Steuereinheit funktional zuordenbar oder zugeordnet ist und dass durch die Steuereinheit ein erstes Schaltsignal zum Schalten des ersten Brückenzweigs, insbesondere der zwei leistungselektronischen Schalter, von einer geöffneten Funktionsstellung in eine geschlossene Funktionsstellung oder umgekehrt generierbar ist, dass durch die Steuereinheit ein zweites Schaltsignal zum Schalten des zweiten Brückenzweigs, insbesondere der zwei leistungselektronischen Schalter, von einer geöffneten Funktionsstellung in eine geschlossene Funktionsstellung oder umgekehrt generierbar ist und/oder dass durch die Steuereinheit ein drittes Schaltsignal zum Schalten des dritten Brückenzweigs, insbesondere der zwei leistungselektronischen Schalter, von einer geöffneten Funktionsstellung in eine geschlossene Funktionsstellung oder umgekehrt generierbar ist.

Hierdurch ist die Effizienz der Aufwärmvorrichtung weiter gesteigert.

Grundsätzlich ist es denkbar, dass die Stromeinprägung durch die Aufwärmvorrichtung in einem beliebigen Frequenzbereich stattfindet, sofern dieser der technischen Funktion nachkommt, dass das Bauteil durch die Aufwärmvorrichtung auf eine bestimmte Temperatur erwärmbar ist. Bei Ausführungsformen der Aufwärmvorrichtung umfasst der Frequenzbereich, innerhalb dem die Aufwärmvorrichtung das Bauteil mittels Stromeinprägung erwärmt, einen Frequenzbereich von 0,01 bis 10 Hz. Durch die geringere Frequenz gegenüber der Lösung mit Transformator lässt sich die Blindleistung, welche von dem z.B. Stator aufgenommen wird, nochmals reduzieren.

Grundsätzlich ist es denkbar, dass durch die Aufwärmvorrichtung, insbesondere dem der Steuereinheit zugeordneten Sensormittel, nur die mindestens drei Phasenströme I_{1,2,3} erfasst werden. Darüber hinaus ist bei einer Ausführungsform der Aufwärmvorrichtung vorgesehen, dass durch das der Steuereinheit zugeordnetem, mindestens eine Sensormittel die den mindestens drei Phasenströmen I_{1,2,3} zugeordneten Phasenspannungen U_{1,2,3} am Bauteil erfassbar sind.

Hierdurch sind Abweichungen der den mindestens drei Phasenströmen I_{1,2,3} zugeordneten Phasenspannungen U_{1,2,3} am Bauteil zur Zwischenkreisspannung U_{DC} erfassbar. Hierdurch bedingt ist auch eine durch die Steuereinheit berechnete Temperatur am Bauteil präzisierbar.

Ferner erweist es sich als vorteilhaft, wenn die Materialkonstante mindestens einen Temperaturkoeffizienten umfasst.

Hierdurch ist eine Berechnung der aktuellen, am Bauteil vorherrschenden Temperatur durch die Steuereinheit erleichtert.

Wenn die Wandlereinrichtung in Richtung auf das elektronische Stellglied keine ausreichend große Ausgangskapazität umfasst, erweist es sich bei einer Ausführungsform der Aufwärmvorrichtung als vorteilhaft, wenn die Aufwärmvorrichtung mindestens einen zwischen Wandlereinrichtung und elektronischem Stellglied angeordneten Kondensator umfasst.

Schließlich kann durch die Aufwärmvorrichtung ein beliebiges Bauteil elektrisch erwärmt werden. Es erweist sich insbesondere als vorteilhaft, wenn das Bauteil ein elektrisch leitendes Metall, insbesondere Kupfer, umfasst.

Schließlich wird die Aufgabe gelöst durch ein Verfahren nach Anspruch 10 zum Betreiben einer Aufwärmvorrichtung mit mindestens einem der zuvor genannten Merkmale zum Erwärmen eines Bauteils, mit den Schritten:
a. Erfassen des ersten Phasenstroms I₁, des zweiten Phasenstroms I₂ und/oder des dritten Phasenstroms I₃ durch das der Steuereinheit zugeordnetem Sensormittel und Erfassen der im Speichermittel hinterlegten mindestens einen Materialkonstante, der Induktivität Ls und des Widerstands Rs des Bauteils und ggf. der Zwischenkreisspannung U_{DC};
b. Berechnen einer IST-Temperatur des Bauteils aus zumindest einem der drei Phasenströme I_{1,2,3}, der Zwischenkreisspannung U_{DC} und der Materialkonstante, der Induktivität Ls und des Widerstands Rs des Bauteils durch die Steuereinheit, insbesondere nach dem ohmschen Gesetz;
c. Erfassen einer Abweichung oder Übereinstimmung zwischen der berechneten IST-Temperatur und einer im Speichermittel hinterlegbaren oder hinterlegten SOLL-Temperatur durch die Steuereinheit;
d. Berechnen eines Sollwerts der Zwischenkreisspannung U_{DC} in Abhängigkeit der erfassten Abweichung oder Übereinstimmung durch die Steuereinheit; und
e. Einstellen des Sollwerts der Zwischenkreisspannung U_{DC} an der Wandlereinrichtung durch die Steuereinheit.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Aufwärmvorrichtung und des Verfahrens.

In der Zeichnung zeigt:
- Figur 1: Eine schematische Darstellung eines Schaltbilds einer Ausführungsform der elektrischen Aufwärmvorrichtung;
- Figur 2: Eine schematische Darstellung eines Ablaufdiagramms eines Verfahrens zum Betreiben einer elektrischen Aufwärmvorrichtung.

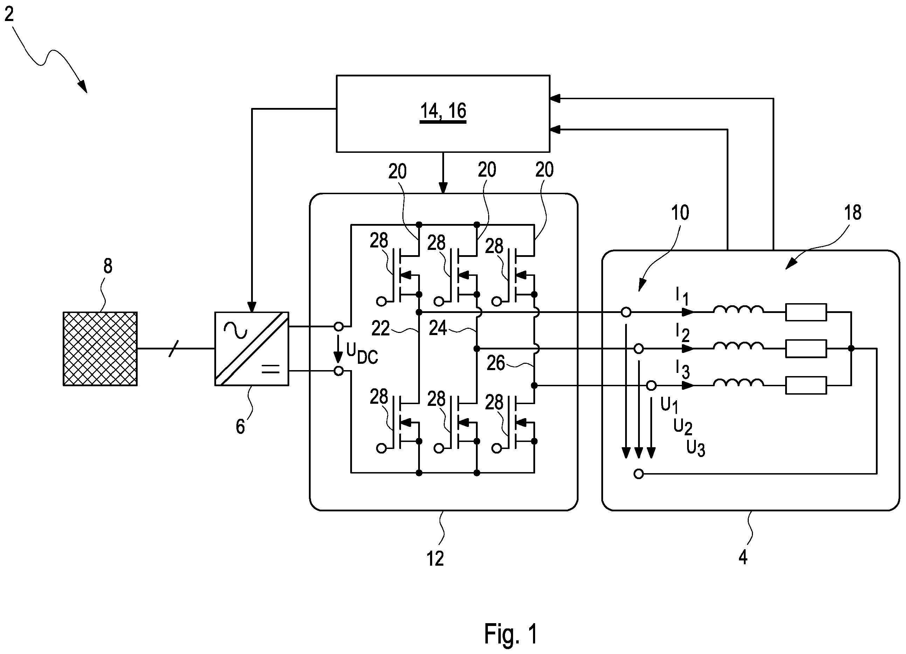

Figur 1 zeigt ein Schaltbild für eine insgesamt mit dem Bezugszeichen 2 versehene elektrische Aufwärmvorrichtung für ein mindestens eine Wicklung umfassendes Bauteil 4.

Die elektrische Aufwärmvorrichtung 2 umfasst mindestens eine Wandlereinrichtung 6, die an ein elektrisches Versorgungsnetz 8 angeschlossen ist. Durch die Wandlereinrichtung 6 kann die Wechselspannung des Versorgungsnetzes 8 in eine Gleichspannung bzw. einen Gleichstrom gewandelt werden.

Darüber hinaus umfasst die elektrische Aufwärmvorrichtung 2 mindestens ein Kontaktmittel 10, das am Bauteil 4 angeordnet ist. Durch das Kontaktmittel 10 ist das Bauteil 4 durch seinen ohmschen Widerstand elektrisch beheizbar. Zwischen dem Kontaktmittel 10 und der Wandlereinrichtung 6 ist ein elektronisches Stellglied 12 angeordnet, das durch eine von der Wandlereinrichtung 6 erzeugten Zwischenkreisspannung U_{DC} betreibbar ist und durch das abwechselnd mindestens ein erster Phasenstrom I₁, ein zweiter Phasenstrom I₂ und/oder ein dritter Phasenstrom I₃ am Kontaktmittel 10 erzeugbar ist.

Darüber hinaus umfasst die elektrische Aufwärmvorrichtung 2 mindestens eine Steuereinheit 14, die mindestens ein Speichermittel 16 umfasst. In dem Speichermittel 16 der Steuereinheit 14 ist mindestens eine Materialkonstante, eine Induktivität Ls und ein Widerstand Rs des Bauteils 4 hinterlegbar oder hinterlegt. Darüber hinaus umfasst die Steuereinheit 14 ein Sensormittel 18, das der Steuereinheit 14 funktional zugeordnet ist und durch das die drei Phasenströme I_{1,2,3} am Bauteil 4 erfassbar sind.

Durch die Steuereinheit 14 ist eine am Bauteil 4 vorherrschende Temperatur berechenbar. Hierbei beruhen die Berechnungen zumindest auf Grundlage der drei Phasenströme I_{1,2,3} der Zwischenkreisspannung U_{DC} sowie der Materialkonstante, der Induktivität L_{L} und des Widerstands Rs des Bauteils 4. Die Berechnungen beruhen ferner insbesondere auf dem ohmschen Gesetz. Durch die Steuereinheit 14 ist ferner ein Sollwert der Zwischenkreisspannung U_{DC} an der Wandlereinrichtung 6 einstellbar.

Bei dem in Figur 1 gezeigten Ausführungsbeispiel der elektrischen Aufwärmvorrichtung 2 umfasst das elektrische Stellglied 12 einen Stromrichter, der drei Brückenzweige 20 umfasst. Hierbei ist durch einen ersten Brückenzweig 22 der erste Phasenstrom I₁, durch einen zweiten Brückenzweig 24 der zweite Phasenstrom I₂ und durch einen dritten Brückenzweig 26 der dritte Phasenstrom I₃ am Kontaktmittel 10 einstellbar.

Die mindestens drei Brückenzweige 20 umfassen jeweils mindestens zwei leitungselektronische Schalter 28, durch die jeweils eine Phasenspannung am jeweiligen Brückenzweig 22, 24, 26 den Wert der Zwischenkreisspannung U_{DC} oder 0 Volt umfasst. Das elektronische Stellglied 12 ist durch die Steuereinheit 14 ansteuerbar und insbesondere die jeweils zwei leistungselektronischen Schalter 28 der jeweiligen Brückenzweige 22, 24 und 26 von einer ungeöffneten Funktionsstellung in eine geöffnete Funktionsstellung oder umgekehrt schaltbar.

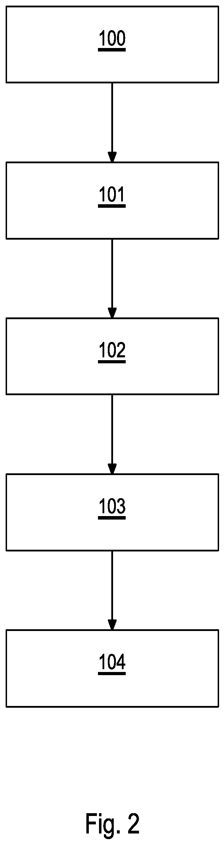

Figur 2 zeigt ein schematisches Ablaufdiagramm eines Verfahrens zum Betreiben einer Aufwärmvorrichtung gemäße Figur 1. Im Folgenden wird das Verfahren in den einzelnen Verfahrensschritten näher erläutert, wobei auf die in Figur 1 gezeigten einzelnen Komponenten der elektrischen Aufwärmvorrichtung 2 verwiesen wird.

In einem ersten Schritt 100 wird ein erster Phasenstrom I₁, ein zweiter Phasenstrom I₂ und/oder ein dritter Phasenstrom I₃ durch das der Steuereinheit 14 zugeordnete Sensormittel 18 erfasst. Darüber hinaus werden in einem Schritt 100 auch die Materialkonstante, die Induktivität Ls und der Widerstand Rs des Bauteils 4 erfasst, sofern diese nicht bereits im Speichermittel 16 der Steuereinheit 14 hinterlegt sind. Ferner kann im Schritt 100 die Zwischenkreisspannung U_{DC} erfasst werden.

In einem nachfolgenden Schritt 101 wird eine IST-Temperatur des Bauteils 4 berechnet. Hierbei wird auf das ohmsche Gesetz zurückgegriffen und zur Berechnung zumindest auf einen der Phasenströme I_{1,2,3}, auf die Zwischenkreisspannung U_{DC} sowie auf die Materialkonstante, die Induktivität Ls und den Widerstands Rs des Bauteils 4 zurückgegriffen.

In einem hieran anschließenden Schritt 102 wird eine Abweichung zwischen der berechneten IST-Temperatur und einer im Speichermittel hinterlegbaren oder hinterlegten SOLL-Temperatur durch die Steuereinheit erfasst. Darüber hinaus kann in einem Schritt 102 auch festgestellt werden, ob IST-Temperatur und SOLL-Temperatur miteinander übereinstimmen.

In einem hieran anschließenden Schritt 103 wird ein SOLL-Wert der Zwischenkreisspannung U_{DC} in Abhängigkeit der erfassten Abweichung oder Übereinstimmung durch die Steuereinheit 14 berechnet.

In einem hieran anschließenden Schritt 104 wird ein SOLL-Wert der Zwischenkreisspannung U_{DC} an der Wandlereinrichtung 6 durch die Steuereinheit 14 eingestellt.

Die oben beschriebenen Ausführungsbeispiele stellen lediglich eine Veranschaulichung der Prinzipien der vorliegenden Erfindung dar. Weitere Abwandlungen und Modifikationen sind möglich im Rahmen der nachstehenden Patentansprüche.

### Bezugszeichenliste

- 2: elektrische Aufwärmvorrichtung
- 4: Bauteil
- 6: Wandlereinrichtung
- 8: elektrisches Versorgungsnetz
- 10: Kontaktmittel
- 12: elektronisches Stellglied
- 14: Steuereinheit
- 16: Speichermittel
- 18: Sensormittel
- 20: Brückenzweige
- 22: erster Brückenzweig
- 24: zweiter Brückenzweig
- 26: dritter Brückenzweig
- 28: leistungselektronische Schalter

## Patentansprüche

1. Elektrische Aufwärmvorrichtung (2) zum Aushärten von Vergussmasse für ein mindestens eine Wicklung umfassendes Bauteil (4), mit mindestens einer Wandlereinrichtung (6), die an ein elektrisches Versorgungsnetz (8) anschließbar ist und durch die die Wechselspannung des Versorgungsnetzes (8) in eine Gleichspannung bzw. einen Gleichstrom wandelbar ist, mit mindestens einem Kontaktmittel (10), das am Bauteil (4) anordenbar oder angeordnet ist und durch das das Bauteil (4) durch seinen ohmschen Widerstand elektrisch beheizbar ist, mit mindestens einem elektronischen Stellglied (12), das zwischen Wandlereinrichtung (6) und Kontaktmittel (10) angeordnet ist, das durch eine von der Wandlereinrichtung (6) erzeugten Zwischenkreisspannung U_{DC} betreibbar ist und durch das abwechselnd mindestens ein erster Phasenstrom I₁, ein zweiter Phasenstrom I₂ und/oder ein dritter Phasenstrom I₃ am Kontaktmittel (10) erzeugbar ist/sind, und mit mindestens einer Steuereinheit (14), die mindestens ein Speichermittel (16) umfasst in der mindestens eine Materialkonstante, eine Induktivität Ls und ein Widerstand Rs des Bauteils (4) hinterlegbar oder hinterlegt ist, der mindestens ein Sensormittel (18) zum Erfassen der mindestens drei Phasenströme I_{1,2,3} am Bauteil (4) funktional zuordenbar oder zugeordnet ist, durch die eine Temperatur am Bauteil (4) zumindest aus den drei Phasenströmen I_{1,2,3}, der Zwischenkreisspannung U_{DC} sowie der Materialkonstante, der Induktivität Ls und des Widerstands Rs des Bauteils (4), insbesondere nach dem ohmschen Gesetz, berechenbar ist, und wobei die Steuereinheit (14) dazu ausgebildet ist, einen Sollwert der Zwischenkreisspannung U_{DC} zum Einstellen einer im Speichermittel (16) hinterlegbaren oder hinterlegten SOLL-Temperatur am Bauteil (4) zu berechnen und den Sollwert der Zwischenkreisspannung U_{DC} an der Wandlereinrichtung (6) einzustellen.

2. Aufwärmvorrichtung (2) nach Anspruch 1, **dadurch gekennzeichnet, dass** das Bauteil (4) ein Wickelgut, wie Stator oder Rotor, und mindestens eine Wicklung umfasst und/oder dass das Kontaktmittel (10) mindestens zwei Kontaktabschnitte umfasst, mit denen es am Bauteil (4) festlegbar oder festgelegt ist, wobei die mindestens zwei Kontaktabschnitte an bezüglich der mindestens einen Wicklung entgegengesetzten Abschnitten am Bauteil (4) festlegbar oder festgelegt ist.

3. Aufwärmvorrichtung (2) nach Anspruch 1 oder 2, **dadurch gekennzeichnet, dass** das elektronische Stellglied (12) mindestens drei Brückenzweige (20) umfasst, wobei durch einen ersten Brückenzweig (22) der erste Phasenstrom I₁, durch einen zweiten Brückenzweig (24) der zweite Phasenstrom I₂ und/oder durch einen dritten Brückenzweig (26) der dritte Phasenstrom I₃ am Kontaktmittel (10) erzeugbar ist.

4. Aufwärmvorrichtung (2) nach Anspruch 3, **dadurch gekennzeichnet, dass** mindestens einer der mindestens drei Brückenzweige (20) mindestens zwei leistungselektronische Schalter (28) umfasst, durch die die jeweilige Phasenspannung am Brückenzweig (20) den Wert der Zwischenkreisspannung U_{DC} oder 0 Volt umfasst.

5. Aufwärmvorrichtung (2) nach Anspruch 4, **dadurch gekennzeichnet, dass** das elektronischen Stellglied (12) der Steuereinheit (14) funktional zuordenbar oder zugeordnet ist und dass durch die Steuereinheit (14) ein erstes Schaltsignal zum Schalten des ersten Brückenzweigs (22), insbesondere der zwei leistungselektronischen Schalter (28), von einer geöffneten Funktionsstellung in eine geschlossene Funktionsstellung oder umgekehrt generierbar ist, dass durch die Steuereinheit (14) ein zweites Schaltsignal zum Schalten des zweiten Brückenzweigs (24), insbesondere der zwei leistungselektronischen Schalter (28), von einer geöffneten Funktionsstellung in eine geschlossene Funktionsstellung oder umgekehrt generierbar ist und/oder dass durch die Steuereinheit (14) ein drittes Schaltsignal zum Schalten des dritten Brückenzweigs (26), insbesondere der zwei leistungselektronischen Schalter (28), von einer geöffneten Funktionsstellung in eine geschlossene Funktionsstellung oder umgekehrt generierbar ist.

6. Aufwärmvorrichtung (2) nach mindestens einem der vorhergehenden Ansprüche, **dadurch gekennzeichnet, dass** der Steuereinheit (14) mindestens ein Sensormittel (18) zuordenbar oder zugeordnet ist durch die den mindestens drei Phasenströmen I_{1,2,3} zugeordneten Phasenspannungen U_{1,2,3} am Bauteil (4) erfassbar sind.

7. Aufwärmvorrichtung (2) nach mindestens einem der vorhergehenden Ansprüche, **dadurch gekennzeichnet, dass** die Materialkonstante mindestens einen Temperaturkoeffizienten umfasst.

8. Aufwärmvorrichtung (2) nach mindestens einem der vorhergehenden Ansprüche, **gekennzeichnet durch** mindestens einen zwischen Wandlereinrichtung (6) und elektronischem Stellglied (12) angeordneten Kondensator.

9. Aufwärmvorrichtung (2) nach mindestens einem der vorhergehenden Ansprüche, **dadurch gekennzeichnet, dass** das Bauteil (4) ein elektrisch leitendes Metall, insbesondere Kupfer, umfasst.

10. Verfahren zum Betreiben einer Aufwärmvorrichtung (2) nach einem der Ansprüche 1 bis 9 zum Erwärmen eines Bauteils (4), mit den Schritten:
a. Erfassen des ersten Phasenstroms I₁, des zweiten Phasenstroms I₂ und/oder des dritten Phasenstroms I₃ durch das der Steuereinheit (14) zugeordnetem Sensormittel (18) und Erfassen der im Speichermittel (16) hinterlegten mindestens einen Materialkonstante, der Induktivität Ls und des Widerstands Rs des Bauteils (4) und ggf. der Zwischenkreisspannung U_{DC};
b. Berechnen einer IST-Temperatur des Bauteils (4) aus zumindest einem der drei Phasenströme I_{1,2,3}, der Zwischenkreisspannung U_{DC} und der Materialkonstante, der Induktivität Ls und des Widerstands Rs des Bauteils (4) durch die Steuereinheit (14), insbesondere nach dem ohmschen Gesetz;
c. Erfassen einer Abweichung oder Übereinstimmung zwischen der berechneten IST-Temperatur und einer im Speichermittel (16) hinterlegbaren oder hinterlegten SOLL-Temperatur durch die Steuereinheit (14);
d. Berechnen eines Sollwerts der Zwischenkreisspannung U_{DC} in Abhängigkeit der erfassten Abweichung oder Übereinstimmung durch die Steuereinheit (14); und
e. Einstellen des Sollwerts der Zwischenkreisspannung U_{DC} an der Wandlereinrichtung (6) durch die Steuereinheit (14).

## Claims

1. Electrical heating device (2) for curing potting compound for a component (4) comprising at least one winding, having at least one converter device (6), which can be connected to an electrical supply network (8) and by means of which the AC voltage of the supply network (8) can be converted into a DC voltage or current, having at least one contact means (10), which can be or is arranged on the component (4) and by means of which the component (4) can be electrically heated by its ohmic resistance, having at least one electric actuator (12), which is arranged between the converter device (6) and the contact means (10), which can be operated by an intermediate circuit voltage U_{DC} generated by the converter device (6) and by means of which at least a first phase current I₁, a second phase current I₂ and/or a third phase current I₃ can be alternately generated at the contact means (10), and having at least one control unit (14), which comprises at least one storage means (16) in which at least a material constant, an inductance Ls and a resistance Rs of the component (4) is or can be stored, to which at least one sensor means (18) for detecting the at least three phase currents I_{1,2,3} on the component (4) can be or is functionally assigned, by means of which a temperature on the component (4) can be calculated at least from the three phase currents I_{1,2,3}, of the intermediate circuit voltage U_{DC} as well as the material constant, the inductivity Ls and the resistance Rs of the component (4), in particular according to Ohm's law, and wherein the control unit (14) is designed to calculate a target value of the intermediate circuit voltage U_{DC} in order to set a SETPOINT temperature on the component (4), which is stored or can be stored in the storage means (16), and to adjust the target value of the intermediate circuit voltage U_{DC} on the converter device (6).

2. Heating device (2) according to Claim 1, **characterised in that** the component (4) comprises a wound material, such as stator or rotor, and at least one winding and/or **in that** the contact means (10) comprises at least two contact sections with which it is or can be fixed to the component (4), wherein the at least two contact sections can be fixed or are fixed at sections on the component (4) which are opposite with respect to the at least one winding.

3. Heating device (2) according to Claim 1 or 2, **characterised in that** the electric actuator (12) comprises at least three bridge branches (20), wherein the first phase current I₁ can be generated by means of a first bridge branch (22), the second phase current I₂ by means of a second bridge branch (24) and/or the third phase current I₃ by means of a third bridge branch (26) on the contact means (10).

4. Heating device (2) according to Claim 3, **characterised in that** at least one of the at least three bridge branches (20) comprises at least two power electronic switches (28) by means of which the respective phase voltage at the bridge branch (20) comprises the value of the intermediate circuit voltage U_{DC} or 0 volts.

5. Heating device (2) according to Claim 4, **characterised in that** the electric actuator (12) is or can be functionally assigned to the control unit (14) and **in that** the control unit (14) can generate a first switching signal for switching the first bridge branch (22), in particular of the two power electronic switches (28), from an open functional position into a closed functional position or vice versa, **in that** the control unit (14) can generate a second switching signal for switching the second bridge branch (24), in particular of the two power electronic switches (28), from an open functional position into a closed functional position or vice versa and/or **in that** the control unit (14) can generate a third switching signal for switching the third bridge branch (26), in particular of the two power electronic switches (28), from an open functional position into a closed functional position or vice versa.

6. Heating device (2) according to at least one of the preceding claims, **characterised in that** at least one sensor means (18) is or can be assigned to the control unit (14), by means of which the phase voltages U_{1,2,3} assigned to the at least three phase currents I_{1,2,3} can be detected on the component (4).

7. Heating device (2) according to at least one of the preceding claims, **characterised in that** the material constant comprises at least one temperature coefficient.

8. Heating device (2) according to at least one of the preceding claims, **characterised by** at least one capacitor arranged between the converter device (6) and electric actuator (12).

9. Heating device (2) according to at least one of the preceding claims, **characterised in that** the component (4) comprises an electrically conductive metal, in particular copper.

10. Method for operating a heating device (2) according to one of Claims 1 to 9 for heating a component (4), having the steps:
a. detecting the first phase current I₁, the second phase current I₂ and/or the third phase current I₃ by means of the sensor means (18) assigned to the control unit (14) and detecting the at least one material constant, the inductance Ls and resistance Rs of the component (4) stored in the storage means (16), and possibly the intermediate circuit voltage U_{DC};
b. calculating an ACTUAL temperature of the component (4) from at least one of the three phase currents I_{1,2,3}, the intermediate circuit voltage U_{DC} and the material constant, the inductance L_{S} and the resistance R_{S} of the component (4) by means of the control unit (14), in particular according to Ohm's law;
c. detecting a deviation or conformity between the calculated ACTUAL temperature and a SETPOINT temperature which is or can be saved in the storage means (16) by means of the control unit (14);
d. calculating a target value of the intermediate circuit voltage U_{DC} as a function of the detected deviation or conformity by means of the control unit (14); and
e. setting the target value of the intermediate circuit voltage U_{DC} on the converter device (6) by means of the control unit (14).

## Revendications

1. Dispositif d'échauffement électrique (2) pour le durcissement d'une masse de coulée pour un composant (4) comprenant au moins un bobinage, avec au moins un convertisseur (6) pouvant être relié à un réseau d'alimentation électrique (8) et au moyen duquel la tension alternative du réseau d'alimentation (8) pouvant être convertie en une tension continue ou en un courant continu, avec au moins un moyen de contact (10) pouvant être disposé ou étant disposé sur le composant (4) et au moyen duquel le composant (4) pouvant être chauffé électriquement par sa résistance ohmique, avec au moins un actionneur électronique (12) qui est disposé entre le convertisseur (6) et le moyen de contact (10) pouvant être actionné par une tension de circuit intermédiaire U_{DC} générée par le convertisseur (6) et au moyen duquel on peut générer alternativement au moins un premier courant de phase I₁, un deuxième courant de phase I₂ et/ou un troisième courant de phase I₃ sur le moyen de contact (10), et avec au moins une unité de commande (14) qui comprend au moins un moyen de stockage (16) dans lequel se trouve au moins une constante matérielle, une inductance L_{S} et une résistance R_{S} du composant (4) pouvant être mémorisées ou étant mémorisées, auxquelles au moins un moyen de détection (18) pour la détection des au moins trois courants de phase I_{1,2,3} sur le composant (4) pouvant être associé fonctionnellement ou y étant associé, au moyen duquel une température sur le composant (4) pouvant être déterminée au moins à partir des trois courants de phase I_{1,2,3}, de la tension de circuit intermédiaire U_{DC} et de la constante matérielle, l'inductance L_{S} et la résistance R_{S} du composant (4), en particulier selon la loi d'Ohm, et l'unité de commande (14) conçue pour calculer une valeur de consigne de la tension de circuit intermédiaire U_{DC} pour le réglage d'une température de consigne sur le composant (4), pouvant être mémorisée ou étant mémorisée dans le moyen de stockage (16), et pour régler la valeur de consigne de la tension de circuit intermédiaire U_{DC} sur le convertisseur (6).

2. Dispositif d'échauffement (2) selon la revendication 1, **caractérisé en ce que** le composant (4) comprend un matériau de bobinage, tel qu'un stator ou un rotor, et au moins un bobinage et/ou que le moyen de contact (10) comprend au moins deux sections de contact au moyen desquelles il peut être fixé ou est fixé au composant (4), au moins deux sections de contact pouvant être fixées ou étant fixées à des sections sur le composant (4) qui sont opposées par rapport à l'au moins un bobinage.

3. Dispositif d'échauffement (2) selon la revendication 1 ou 2, **caractérisé en ce que** l'actionneur électronique (12) comprend au moins trois branches de pontage (20), le premier courant de phase I₁, pouvant être généré sur le moyen de contact (10) par une première branche de pontage (22), le deuxième courant de phase I₂ pouvant être généré sur le moyen de contact (10) par une deuxième branche de pontage (24) et/ou le troisième courant de phase I₃ pouvant être généré sur le moyen de contact (10) par une troisième branche de pontage (26).

4. Dispositif d'échauffement (2) selon la revendication 3, **caractérisé en ce qu'**au moins une des au moins trois branches de pontage (20) comprend au moins deux commutateurs électroniques de puissance (28) au moyen desquels la tension de phase respective à la branche de pontage (20) comprend la valeur de la tension de circuit intermédiaire U_{DC} ou 0 volt.

5. Dispositif d'échauffement (2) selon la revendication 4, **caractérisé en ce que** l'actionneur électronique (12) pouvant être associé fonctionnellement ou étant associé à l'unité de commande (14), que l'unité de commande (14) peut générer un premier signal de commutation pour commuter la première branche de pontage (22), en particulier les deux commutateurs électroniques de puissance (28) d'une position fonctionnelle ouverte à une position fonctionnelle fermée ou vice versa, que l'unité de commande (14) peut générer un deuxième signal de commutation pour commuter la deuxième branche de pontage (24), en particulier les deux commutateurs électroniques de puissance (28) d'une position fonctionnelle ouverte à une position fonctionnelle fermée ou vice versa, et/ou qu'un troisième signal de commutation pour la commutation de la troisième branche de pontage (26), en particulier des deux commutateurs électroniques de puissance (28), d'une position fonctionnelle ouverte à une position fonctionnelle fermée ou vice versa, pouvant être généré par l'unité de commande (14).

6. Dispositif d'échauffement (2) selon au moins l'une des revendications précédentes, **caractérisé en ce qu'**au moins un moyen de détection (18) pouvant être associé ou étant associé à l'unité de commande (14), au moyen duquel les tensions de phase I_{1,2,3} associées aux au moins trois courants de phase U_{1,2,3} peuvent être détectées sur le composant (4).

7. Dispositif d'échauffement (2) selon au moins l'une des revendications précédentes, **caractérisé en ce que** la constante matérielle comprend au moins un coefficient de température.

8. Dispositif d'échauffement (2) selon au moins une des revendications précédentes, **caractérisé par** au moins un condensateur disposé entre le convertisseur (6) et l'actionneur électronique (12).

9. Dispositif d'échauffement (2) selon au moins l'une des revendications précédentes, **caractérisé en ce que** le composant (4) comprend un métal électriquement conducteur, notamment du cuivre.

10. Procédé de fonctionnement d'un dispositif d'échauffement (2) selon l'une des revendications 1 à 9 pour chauffer un composant (4), comprenant les étapes :
a. Détection du premier courant de phase I₁, du deuxième courant de phase I₂ et/ou du troisième courant de phase I₃ par les moyens de détection (18) associés à l'unité de commande (14) et détection de l'au moins une constante matérielle mémorisée dans le moyen de stockage (16), de l'inductance L_{S} et de la résistance R_{S} du composant (4) et, le cas échéant, de la tension de circuit intermédiaire U_{DC} ;
b. Calcul d'une température RÉELLE du composant (4) à partir d'au moins l'un des trois courants de phase I_{1,2,3}, de la tension de circuit intermédiaire U_{DC} et de la constante matérielle, de l'inductance L_{S} et de la résistance R_{S} du composant (4) par l'unité de commande (14), en particulier selon la loi d'Ohm ;
c. Détection par l'unité de commande (14) d'un écart ou d'une correspondance entre la température réelle calculée et une température de consigne pouvant être mémorisée ou étant mémorisée dans le moyen de stockage (16) ;
d. Calcul d'une valeur de consigne de la tension de circuit intermédiaire U_{DC} en fonction de la déviation ou de la correspondance détectée par l'unité de commande (14) ; et
e. Régulation de la valeur de consigne de la tension de circuit intermédiaire U_{DC} au niveau du convertisseur (6) par l'unité de commande (14).
